# EUROPEAN PATENT APPLICATION

(11) **EP 1 533 145 A2**
(43) Date of publication of application: **25.05.2005**
(21) Application number: 04024657.1
(22) Date of filing: 15.10.2004
(51) Int. Cl.: B60C 23/04

(54) **Pressure and temperature sensing device for tires of cars, motorcycles and the like**

(30) Priority: 19.11.2003 IT MO20030311
(71) Applicant: Meta System S.p.A., 42100 Reggio Emilia (IT)
(72) Inventor: Simonazzi, Giuseppe, 42100 Reggio Emilia (IT); Bigliardi, Severino, 42020 San Polo D'Enza (Reggio Emilia) (IT)
(74) Representative: Modiano, Guido, Dr.-Ing.

(57) **Abstract**

A pressure and temperature sensing device (1) for tires, particularly for cars, motorcycles and the like, comprising: sensing means (3, 4, 5, 6), which are adapted to detect the pressure and temperature of the tire to which the sensing device is connected; power supply means (2), which are adapted to supply power to the sensing means; at least one microcontroller (7), which is adapted to be supplied by the sensing means (3, 4, 5, 6) and to drive a radiofrequency circuit (8) for transmitting data that arrive from the sensing means to an electronic control unit arranged on board the vehicle; and receiver means (10) adapted to receive an electromagnetic signal and to activate the at least one microcontroller (7), the receiver means being passive, so as to not absorb energy of the power supply means.

## Description

The present invention relates to a pressure and temperature sensing device for tires of cars, motorcycles and the like. More particularly, the present invention relates to a pressure and temperature sensing device for tires that has optimized consumption and therefore a longer operating life than conventional devices.

As it is known, pressure and temperature sensing devices are currently commercially available which are fixed to the tire inflation valve, which in turn is fixed to the wheel rim.

The device consists of a printed circuit with the entire electronic part on board, contained in a resin-encapsulated enclosure.

Currently known devices comprise modules with an internal power supply battery, which detect whether the vehicle is moving or not and interact with the electronic control unit installed on the vehicle. In case of an anomaly, they notify the control unit, which in turn transmits an alarm signal, which can be acoustic, luminous or the like.

Currently, the sensor lasts approximately five years, after which it has to be replaced.

The main drawback of conventional sensors is therefore their operating life.

Moreover, conventional sensors cannot be placed in a test mode after they have been encapsulated in resin in the containment enclosure. Likewise, the internal operating parameters of the microprocessor that is present inside the enclosure of the sensing device cannot be changed once the sensing device is prepared for use.

The aim of the present invention is to provide a pressure and temperature sensing device for tires of vehicles, motorcycles and the like that allows to have a reduced energy consumption with respect to conventional devices, thus extending the useful operating life of the device.

Within this aim, an object of the present invention is to provide a pressure and temperature sensing device for tires that can be placed in a test mode even after the sensing device has been encapsulated in resin in its containment enclosure.

Another object of the present invention is to provide a pressure and temperature sensing device for tires that allows an operator to vary the internal operating parameters of the microprocessor even after the device has been accommodated and encapsulated in resin in its containment enclosure.

Another object of the present invention is to provide a pressure and temperature sensing device for tires that is highly reliable, relatively simple to provide, and at competitive costs.

This aim and these and other objects that will become better apparent hereinafter are achieved by a pressure and temperature sensing device for tires, particularly for cars, motorcycles and the like, which comprises: sensing means, which are suitable to detect the pressure and temperature of the tire to which said sensing device is connected; power supply means, which are suitable to supply power to said sensing means; and at least one microcontroller, which is suitable to be supplied by said sensing means and to drive a radiofrequency circuit for transmitting data that arrive from said sensing means to an electronic control unit arranged on board the vehicle, characterized in that it comprises receiver means suitable to receive an electromagnetic signal and to activate said at least one microcontroller, said receiver means being passive, so as to not absorb energy from said power supply means.

Further characteristics and advantages of the present invention will become better apparent from the following detailed description of a preferred but not exclusive embodiment of the device according to the present invention, illustrated by way of non-limiting example in the accompanying drawings, wherein:
Figure 1 is a block diagram of the sensing device according to the present invention; and
Figure 2 is a block diagram of the receiver circuit used in the device according to the present invention.

With reference to the figures, a pressure and temperature sensing device for tires, according to the present invention, generally designated by the reference numeral 1, comprises a printed circuit with onboard electronic components, which is contained in a resin-encapsulated enclosure. The electronic part of the device comprises power supply means 2, which are conveniently constituted for example by a battery that supplies power to sensing means, which conveniently comprise pressure sensing means 3, temperature sensing means 4, centrifugal acceleration sensing means 5, and means 6 for detecting the voltage of the power supply battery 2.

The device according to the invention further comprises a microcontroller 7, which measures and encodes the information so as to transmit it, by means of a radiofrequency circuit 8 and at least one antenna 9, to a control unit of the vehicle. The microcontroller 7 thus transmits information related to the measurements made by the sensing means 3, 4, 5 and 6.

Conveniently, the device according to the present invention further has a receiver circuit 10, which is advantageously constituted by an inductor provided on the printed circuit and arranged below the battery 2; the inductor is associated with a capacitor, and said circuit is designed to constitute a resonant circuit with a high resonance factor Q.

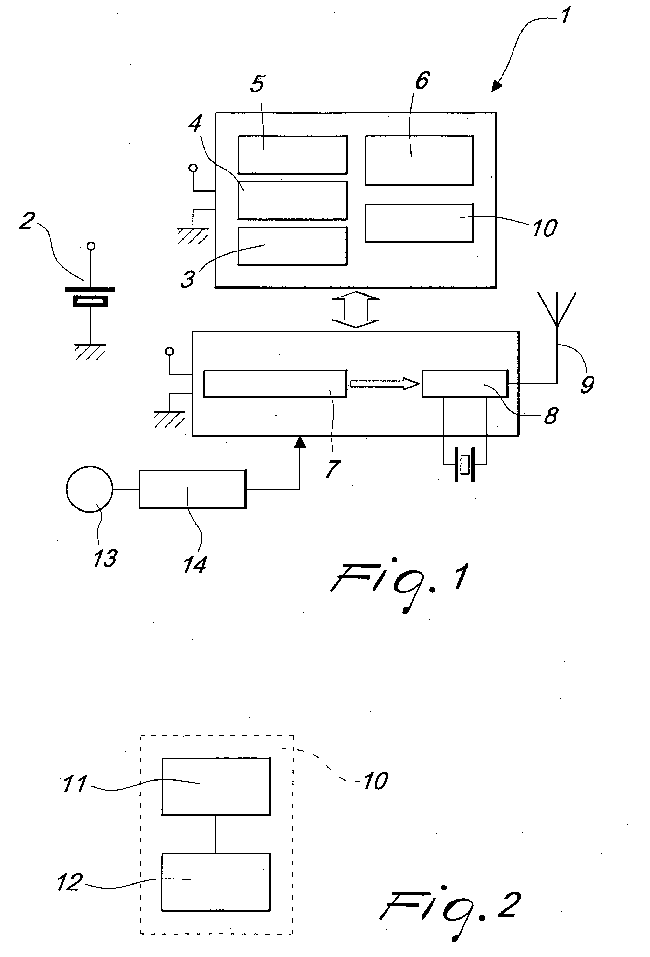

Figure 2 is a block diagram of an inductor 11, which is connected to a capacitor 12 so as to constitute the resonant circuit that constitutes the receiver 10.

The resonant circuit, if stimulated externally with an electromagnetic signal, is capable of generating a voltage that is sufficient to drive the microcontroller 7 inside the sensing device according to the invention.

It is possible to amplitude-modulate the stimulus signal sent to the resonant circuit and thus send encoded messages to the microcontroller 7.

The resonant circuit 10 is passive and therefore does not absorb current from the internal battery. Substantially, therefore, the receiver circuit does not absorb energy from the battery 2, and the microcontroller can remain in standby mode and be wakened exclusively by the receiver circuit 10; therefore, the only components that absorb current are the sensing means 3, 4, 5 and 6, with the result that the life of the battery decreases very slowly with respect to conventional sensing devices, in which each component absorbs energy from the battery.

Moreover, by means of the receiver circuit 10 it is possible to send the sensing device according to the invention into a test mode even after the device has been encapsulated in resin within its containment enclosure.

It is also possible, again by means of the receiver circuit 10, to modify the internal operating parameters of the device even when the device is already assembled.

The device according to the invention, as shown in Figure 1, further comprises a low-frequency antenna 13, which is connected to a low-frequency detector circuit 14 for test purposes, which is connected to the microcontroller 7.

In practice, it has been found that the sensing device according to the present invention fully achieves the intended aim and objects, since it allows to have an extremely reduced energy consumption with respect to conventional sensing devices, thanks to the presence of the receiver circuit 10, and allows to "wake up" the microcontroller 7, when appropriately stimulated by an electromagnetic signal, so that the microcontroller is substantially a component that absorbs energy only when it is activated. The receiver circuit 10 in turn does not absorb energy, since it is an entirely passive component.

Accordingly, the useful life of the battery used to power the sensing device according to the present invention is optimized with respect to conventional sensing devices, thus solving one of their drawbacks.

The device thus conceived is susceptible of numerous modifications and variations, all of which are within the scope of the appended claims; all the details may further be replaced with other technically equivalent elements.

In practice, the materials used, as well as the contingent shapes and dimensions, may be any according to requirements and to the state of the art.

The disclosures in Italian Patent Application No. MO2003A000311 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A pressure and temperature sensing device (1) for tires, particularly for cars, motorcycles and the like, comprising: sensing means (3, 4, 5, 6), which are adapted to detect the pressure and temperature of the tire to which said sensing device is connected; power supply means (2), which are adapted to supply power to said sensing means; and at least one microcontroller (7), which is adapted to be supplied by said sensing means and to drive a radiofrequency circuit (8) for transmitting data that arrive from said sensing means to an electronic control unit arranged on board the vehicle, **characterized in that** it comprises receiver means (10) adapted to receive an electromagnetic signal and to activate said at least one microcontroller, said receiver means being passive, so as to not absorb energy from said power supply means.

2. The device according to claim 1, **characterized in that** said sensing means (3, 4, 5, 6) comprise a resonant circuit (10) with a high resonance factor.

3. The device according to claim 2, **characterized in that** said resonant circuit (10) comprises an inductor (11) associated with a capacitor (12).

4. The device according to one or more of the preceding claims, **characterized in that** it further comprises means (5) for sensing centrifugal acceleration and means (6) for sensing the voltage of the power supply (2).

5. The device according to one or more of the preceding claims, **characterized in that** it comprises an antenna (9) for the transmission of data by said microcontroller (7) to the control unit.

6. The device according to one or more of the preceding claims, **characterized in that** it is inserted in a resin-encapsulated enclosure.

7. The device according to one or more of the preceding claims, **characterized in that** said electromagnetic signal adapted to stimulate said receiver means (10) can be amplitude-modulated so as to send encoded messages to said microcontroller (7) by way of said receiver means.
